# EUROPEAN PATENT SPECIFICATION

(11) **EP 4 124 960 B1**
(45) Date of publication and mention of the grant of the patent: **30.09.2026**
(21) Application number: 21927035.2
(22) Date of filing: 06.07.2021
(51) Int. Cl.: G06F 11/30

(54) **METHOD AND SYSTEM FOR INSPECTING MEMORY OF MULTI-CORE PROCESSOR**
SPEICHERPRÜFVERFAHREN UND -SYSTEM FÜR MEHRKERNPROZESSOR
PROCÉDÉ ET SYSTÈME D'INSPECTION DE MÉMOIRE DE PROCESSEUR MULTICOEUR

(30) Priority: 10.06.2021 CN 202110645142
(43) Date of publication of application: 01.02.2023
(73) Proprietor: CRSC RESEARCH & DESIGN INSTITUTE GROUP CO., LTD., Fengtai District Beijing 100070 (CN)
(72) Inventor: YU, Qing, Beijing 100070 (CN); TAN, Chao, Beijing 100070 (CN); ZHANG, Zhihui, Beijing 100070 (CN)
(74) Representative: Huang, Liwei
(86) International application number: PCT/CN2021/104725
(87) International publication number: WO 2022/257210

(56) References cited:
- CN-A- 110 990 187
- CN-A- 111 124 792
- CN-A- 112 256 502
- US-A1- 2007 214 340
- US-A1- 2020 334 062

## Description

### TECHNICAL FIELD

The present invention relates to the field of safety-related equipment technologies, and in particular to a memory inspection method and system for a multi-core processor.

### BACKGROUND ART

At present, when a security-related equipment is developed, generally, it is necessary to check whether a memory is faulty, thereby reducing the system risk caused by the memory fault. A read-only data-storage memory is usually verified through the CRC check. A regular read/write comparison is performed on a variable-data memory to detect whether it is damaged.

The read/write comparison detection method is as follows:
Before the memory is detected, other tasks of the CPU are stopped from running. Then, the memory detection includes:
1, copying data of a detected region to a backup region;
2, writing designated data to the detected region;
3, reading data from the detected region and comparing it with a written value to determine whether they consistent; and
4, after the detection is completed, restoring the data from the backup region to the detected region.

After the detection is completed, the normal running of the system is resumed.

In the read/write comparison method, it is necessary to perform a read/write operation on the detected memory region during the detection. This operation affects the running of the system task. Therefore, during the detection performed using such a method, all other tasks of the system must be stopped.

In the prior art, memory inspection is applied to a system using a single-core processor, and the memory inspection can be started by stopping all tasks in the processor core from running. As multi-core processors are used increasingly widely, it is a trend for security systems to use multi-core processors. Therefore, a memory inspection method for a multi-core processor is required.

US 2007/0214340 A1 discloses a symmetric multiprocessing fault-tolerant computer system in which access to shared memory is controlled by virtual page structures reflecting physical-page access privileges, so that deterministic shared-memory access between processors can be coordinated, for example in duplication or continuous-replay operation.

### SUMMARY

The invention is defined by the appended independent claims.

To resolve the foregoing problem, disclosed is a memory inspection method of a multi-core processor, comprising:
setting, in a memory, a first inspection information region used in a first inspection task, where the first inspection information region includes a first inter-core communication data region and a first inspection-task stack region; and
during a memory inspection, performing inter-core interruption communication by using the first inter-core communication data region, to notify another processor core to stop running a task, where
the another processor core is different from a first processor core used during the first inspection task.

Further, the method includes:
setting, in the memory, a second inspection information region used in a second inspection task, where the second inspection information region includes a second inter-core communication data region and a second inspection-task stack region; and
the second inspection task is configured to check the first inspection information region.

Further, the first inspection information region further includes a first memory inspection data region and a first data backup region, where
the first memory inspection data region is configured to save inspection data of the first inspection task;
the first data backup region is configured to back up detected memory region data; and
the first inspection-task stack region is configured as a stack of the first inspection task.

Further, the first inspection task and the second inspection task are run in a mutually exclusive manner by using the first inter-core communication data region and the second inter-core communication data region.

Further, the another processor core responds to an inter-core interruption, and writes designated data into the first inter-core communication data region to indicate that this processor core has stopped running the task.

Further, an interruption acknowledge region corresponding to the another processor core in the first inter-core communication data region, and an interruption acknowledge character is written into a corresponding interruption acknowledge region to indicate that the another processor core has stopped running the task.

Further, the performing inter-core interruption communication by using the first inter-core communication data region includes:
setting an inspection flag of the first inter-core communication data region as an inspection start during the first inspection task, and setting the inspection flag as an inspection end after the first inspection task; and
polling and checking, by the another processor core, the inspection flag of the first inter-core communication data region, and restoring the running of the task when the inspection flag is the inspection end.

Further, an inspection flag region is set in the first inter-core communication data region, to store the inspection flag.

Further, the method includes:
(1) starting the inspection task, and performing steps (2) and (3);
(2) turning off an interruption/schedule, and turning off an interruption response of the first processor core and stopping the task from running;
(3) sending the inter-core interruption, notifying the another processor core to stop running in an IPI communication manner, and continue to perform step (6) by the first processor core;
(4) after the another processor core receives an inter-core interruption notification of the inspection task, turning off the interruption response and stopping the task from running, and then performing step (5);
(5) replying with interruption acknowledge by the another processor core that has turned off the interruption, and continue to perform step (11);
(6) checking, during the inspection task, whether the another processor core has stopped running, and continue to perform step (6) if there is a core that has not stopped running in the another processor core; and performing step (7) if the another processor core has stopped running;
(7) inspecting, by the first processor core, the memory, and then performing steps (8) and (9);
(8) setting the inspection flag of the first inter-core communication data region as the inspection end;
(9) turning on the interruption and schedule of the first processor core, and continue to perform step (10);
(10) making the inspection sleep, to wait for next triggering of the inspection task; and
(11) polling, by the another processor core, the first inter-core communication data region, to check whether the inspection task is completed, continue to perform step (11) if the inspection task is not completed, and exiting the interruption if the inspection task is completed.

Further disclosed is a memory inspection system of a multi-core processor, including:
a setting module configured to set, in a memory, a first inspection information region used in a first inspection task, where the first inspection information region includes a first inter-core communication data region and a first inspection-task stack region; and
an execution module configured to perform the first inspection task and inspect the memory, and perform inter-core interruption communication by using the first inter-core communication data region, to notify another processor core to stop running a task, where
the another processor core is different from a first processor core used during the first inspection task.

Further, the setting module is further configured to:
set, in the memory, a second inspection information region used in a second inspection task, where the second inspection information region includes a second inter-core communication data region and a second inspection-task stack region; and
the second inspection task is configured to check the first inspection information region; and
the execution module is further configured to perform the second inspection task.

Further, the first inspection information region further includes a first memory inspection data region and a first data backup region, where
the first memory inspection data region is configured to save inspection data of the first inspection task;
the first data backup region is configured to back up detected memory region data; and
the first inspection-task stack region is configured as a stack of the first inspection task.

Further, the execution module is configured to control the first inspection task and the second inspection task to run in a mutually exclusive manner by using the first inter-core communication data region and the second inter-core communication data region.

Further, the system further includes an interruption response module configured to control the another processor core to respond to an inter-core interruption, and write designated data into the first inter-core communication data region to indicate that this processor core has stopped running the task.

Further disclosed is a memory inspection system for a multi-core processor, including at least one processor and at least one memory, where
the memory is configured to store a computer program for executing the memory inspection method of a multi-core processor, and the processor is configured to invoke the computer program in the memory to execute the memory inspection method of a multi-core processor.

In the memory inspection method and system of a multi-core processor detection is performed on the memory of the multi-core processor by using the first inter-core communication data region and inter-core interruption communication. By setting two inspection information regions and two inspection tasks, the coverage of memory inspection is improved, thereby improving the reliability of memory inspection results. Other features and advantages of the present invention are described in the specification, and some of them are apparent from the description, or may be learned by practice of the present invention. The objectives and other advantages of the present invention may be implemented and obtained by using the structure described in the specification, claims, and drawings.

### BRIEF DESCRIPTION OF THE DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a schematic structural diagram of an inspection information region according to an embodiment of the present invention.
FIG. 2 is a schematic structural diagram of inspection information regions of two inspection tasks.
FIG. 3 is a flowchart of inspecting a memory of a multi-core processor.
FIG. 4 is a schematic structural diagram of a memory inspection system of the multi-core processor
FIG. 5 is a schematic structural diagram of another memory inspection system of a multi-core processor

### DETAILED DESCRIPTION

In order to make the objectives, technical solutions and advantages of the embodiments of the present invention clearer, the technical solutions in the embodiments of the present invention are clearly and completely described below in conjunction with the drawings in the embodiments of the present invention. Apparently, the described embodiments are some rather than all of the embodiments of the present invention. All other embodiments obtained by a person of ordinary skill in the art on the basis of the embodiments of the present invention without creative efforts shall fall within the protection scope of the present invention.

The embodiments of the present invention provide a memory inspection method for a multi-core processor. In this method, timed and fragmented inspection is performed on the system memory in the case of a plurality of cores and tasks. A dedicated memory inspection task is started. The task runs periodically. Only one memory region is detected in each running cycle, and the complete memory detection is finished within a specific time period.

According to whether the data in the memory region changes during system operation, different inspection manners are used. In the memory region (a code segment, a constant data region, and the like) where the memory data does not change during the system operation, the memory is inspected by means of CRC inspection. In the memory region (a data segment, a stack, a heap, and the like) where the memory data changes during the system operation, the memory is inspected by means of write/read inspection. The two inspection manners are described in detail below.

The CRC inspection includes: pre-calculating a CRC value of a to-be-inspected region and storing it at a designated address. During inspection, the CRC value of the inspection region is calculated and compared with the corresponding pre-stored CRC value to check whether the data in the region has changed. If the calculated CRC value is consistent with the stored CRC value, it is considered that the data in the region has not changed, and the memory of the inspection region is normal; otherwise, the memory of the inspection region is considered abnormal.

The read/write inspection includes: writing data of a designated pattern to a designated region (the to-be-inspected region), reading back the data in the region, comparing the written data and the read data to check whether they are consistent, and determining that the memory is faulty if they are inconsistent. To ensure that the read/write inspection operation does not destroy existing memory data, the original data is backed up before the operation, and the original data is resumed after the verification is completed.

A plurality of cores of the processor can jointly access the system memory. Therefore, during the memory inspection performed by means of the read/write comparison, the tasks on all processor cores must be stopped to prevent incorrect modification of data from affecting the memory inspection results and the running of the system tasks. During the inspection, it is necessary to stop all tasks except the inspection task from running and turn off the interruption. The write operation needs to be performed on memory during the memory detection, and it is necessary to access the memory for the system task running. Moreover, a case that incorrect data is used when the system task is performed during the inspection may occur. Therefore, during the inspection, it is necessary to stop all tasks from running to prevent errors. In addition, in the present application, an interruption is turned off to prevent the other tasks from being resumed because of the interruption during the inspection, or the inspection task from being stopped. This ensures that no other program can run when the inspection task is performed.

In addition, the memory resources required in the inspection task cannot be detected, that is, a memory used in the inspection task cannot be detected during this task. The stack used in the inspection task is located in an independent memory region, which cannot be detected in the inspection task. The system memory heap and data region cannot be used in the inspection task. Therefore, the data and information related to the inspection are recorded in a designated memory region, and the region cannot be inspected. Therefore, to fully detect the memory, in the inspection method the memory region used in the foregoing inspection task (the first inspection task-the inspection task 1) is detected by starting a second inspection task-an inspection task 2.

A dedicated memory region is defined for use of the memory inspection function. The region includes the stack used in the inspection task, inspection configuration, and storage of inspection data. The storage information of system global variables and static variables cannot be used when the memory inspection function is performed. Corresponding inspection information is stored in the dedicated memory region.

The memory inspection method for a multi-core processor includes at least one inspection task, and a corresponding dedicated memory region is set. When the inspection task is executed, the plurality of cores of the processor stop the tasks from running and turn off interruptions. The memory inspection method for a multi-core processor includes:
setting, in a memory, a first inspection information region used in a first inspection task, where the first inspection information region includes a first inter-core communication data region and a first inspection-task stack region; and
during a memory inspection, performing inter-core interruption communication by using the first inter-core communication data region, to notify another processor core to stop running a task, where the another processor core is different from a first processor core used during the first inspection task.

Further, the first inspection information region further includes a first memory inspection data region and a first data backup region, where
the first memory inspection data region is configured to save inspection data of the first inspection task;
the first data backup region is configured to back up detected memory region data; and
the first inspection-task stack region is configured as a stack of the first inspection task.

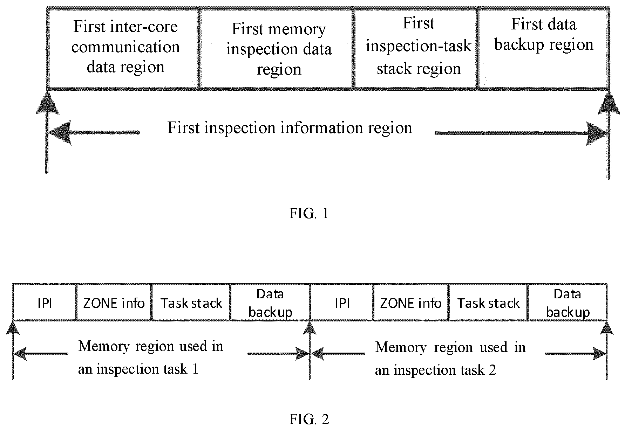

As shown in FIG. 1, the first inspection information region includes the first inter-core communication data region, the first memory inspection data region, the first inspection-task stack region, and the first data backup region. The regions included in the inspection information region are exemplified, the length of each region is set as required, and the sequence and continuity of the regions are not limited.

The first inspection task runs on the first processor core. The first inter-core communication data region is used to perform inter-core interruption communication. The another processor core responds to an inter-core interruption, and writes designated data into the first inter-core communication data region to indicate that this processor core has stopped running the task. The first inter-core communication data region includes an inspection flag region and an interruption acknowledge region. The inspection flag region is configured to store the inspection flag, to notify the another processor to start or end the inspection task. The interruption acknowledge region includes one or more regions corresponding to the other processor cores, which are respectively used by the other processor cores to write back interruption acknowledge characters to the corresponding regions. It is determined, according to the acknowledge character written back, whether the inspection task is started. Only after the other processor cores in the multi-core processor all have written back the interruption acknowledge characters does the inspection start. An interruption acknowledge region corresponding to the another processor core is set in the first inter-core communication data region, and an interruption acknowledge character is written into a corresponding interruption acknowledge region to indicate that the another processor core has stopped running the task.

Generally, the first processor core includes 0 core, and the another processor core includes at least one core or three cores, namely, a core 1, a core 2, and a core 3, and may further include another quantity of cores. In this case, the first inter-core communication data region includes one inspection flag region and three interruption acknowledge regions. The three cores write interruption acknowledge characters into the three interruption acknowledge regions respectively.

To perform the memory inspection in the dedicated memory region used in the first inspection task, that is, the first inspection information region, in the embodiments of the present invention, a second inspection information region used in a second inspection task is also set in the memory, where the second inspection information region includes a second inter-core communication data region and a second inspection-task stack region; and the second inspection task is configured to check the first inspection information region. Further, the second inspection information region further includes a second memory inspection data region and a second data backup region. The second memory inspection data region is configured to save the inspection data of the second inspection task. The second data backup region is configured to back up the detected memory region data. The second inspection-task stack region is configured as the stack of the second inspection task.

The first inspection task and the second inspection task are run in a mutually exclusive manner, and only one inspection task can be run in the system at a moment to prevent conflicts.

The first inter-core communication data region and the second inter-core communication data region are used to realize mutually exclusive operation of two inspection tasks. When any inspection task starts, the other task is closed and an interruption is turned off. Therefore, when one inspection task starts to run, the another inspection task cannot get the chance to run. The inter-core communication data region is configured to notify the another processor core whether this inspection is completed. After the another processor core stops running the task, the inter-core communication data region is polled to check whether the inspection is completed. If the inspection is completed, the operation is resumed.

As shown in FIG. 2, the memory region layout of the two inspection tasks includes a first inspection information region and a second inspection information region.

A part of the memory is used as a dedicated memory region for inspection, which is divided into two halves. One half is used for the system inspection task, that is, an inspection task 1, and the other half is used for the inspection task in the inspection task region, that is, an inspection task 2. The first inspection information region and the first inspection information region are of a same structure. Both include the following regions:
an inter-core communication data region (IPI region) configured to exchange information between processor cores, where generally, the inter-core communication data region of each task has a structure, including the inspection flag region and the interruption acknowledge region;
a memory inspection data region (ZONE info), where because the global data cannot be used in the inspection task, this region is configured to save inspection data; and the global data region is located in the system data region and is the object of memory inspection, a read/write operation needs to be performed on the global data region during the inspection, and therefore, the global data cannot be used;
an inspection task stack region configured as an inspection task stack, where the local variables are stored through the stack when the inspection task is executed; and
a data backup region configured to back up data of the detected memory region, where after the detection, the detected data region is resumed.

By setting the first inspection information region and the second inspection information region, when the first inspection task is not performed (in an asleep state), the second inspection task may be started specifically for detecting the memory region used in the first inspection task, to fully detect the memory. In addition to the memory region used in the first inspection task, other regions may be inspected, including the second inspection information region. The second inspection task is used to inspect the information region of the first inspection task, to inspect the entire system memory without omission. Generally, when the memory is found abnormal in the inspected region in any inspection task, the same logic for processing abnormality is performed. For example, the abnormal position is reported. For the read/write comparison inspection method, it is necessary to stop other tasks of the system from running and disable the interruption response. The performing inter-core interruption communication by using the first inter-core communication data region includes: setting an inspection flag of the first inter-core communication data region as an inspection start after the first inspection task starts, and setting the inspection flag as an inspection end after the first inspection task; and polling and checking, by the another processor core, the inspection flag of the first inter-core communication data region, and restoring the running of the task when the inspection flag is the inspection end.

When inspection tasks (including the first inspection task) are run on a processor with 0 core (a plurality of inspection tasks are all run on the first processor core), and an inter-core interruption is sent to the other processor through the inter-core interruption communication before the inspection task, the other processor responds to the inter-core interruption right away, and replies with an acknowledge character (ACK). In the embodiments of the present invention, the ACK is written back into the interruption acknowledge region corresponding to the other process. Then, the another processor core polls the inspection flag region of the inter-core communication data region, to wait for the inspection to end, and continues to run the system task after the inspection.

After the inspection is started, the interruption and schedule need to be turned off, and then the other processor is notified through the IPI communication manner to stop running. After all the processor cores have stopped running, the inspection is started. After the inspection is completed, the inspection flag of the inspection end is written into the IPI region. The another processor core polls the inspection flag, and resumes the system operation after the inspection ends.

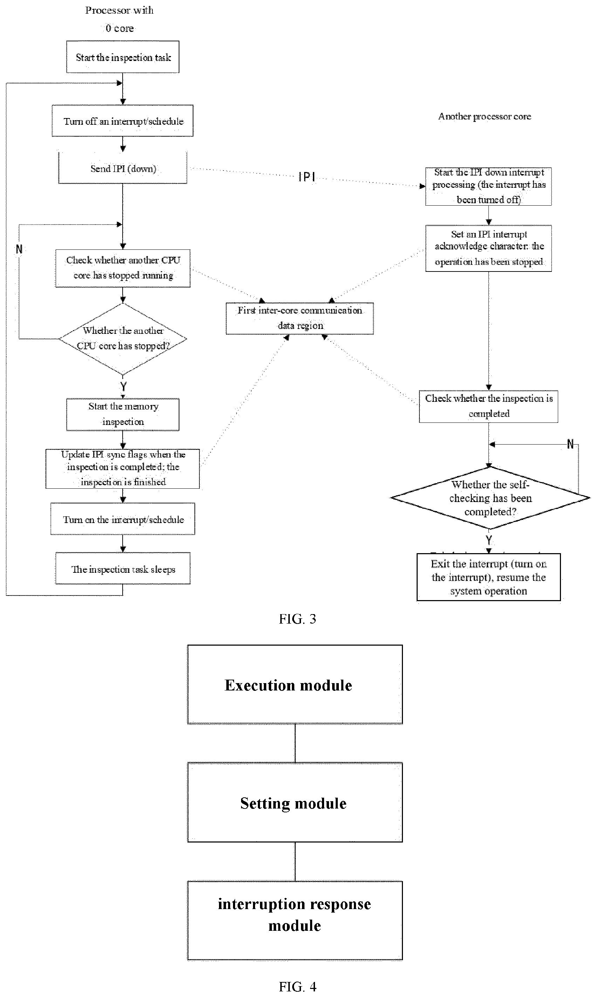

With reference to FIG. 3, the following is an exemplary description of the system memory inspection process of the multi-core processor. The inspection task in the figure is the system inspection task, that is, the first inspection task in the embodiments of the present invention, which runs on the CPU with 0 core. The inspection process includes the following steps:
(1) Start the inspection task, and perform steps (2) and (3), where the execution order of the two steps is not limited, but preferably, step (2) is performed first. For example, the system memory inspection task is performed according to a designated period, and the inspection task may be started in a timer-triggered manner.
(2) Turn off an interruption/schedule, and turn off an interruption response of the processor core (the first processor core with 0 core) where the inspection task is located and stop the task from running.
(3) Send the inter-core interruption (IPI-down, stop running), and notify the another processor core to stop running in an IPI communication manner. In the inspection task, an inspection flag of a corresponding inspection flag region (the first inter-core communication data region), especially, the inspection flag of the inspection flag region, is set as an inspection start, to notify the another processor core to stop the interruption response and running the task. In another example, other communication manners such as inter-process communication or memory sharing may also be used to notify the another processor core to stop running. The first processor core continues to perform step (6).
(4) After the another processor core receives the inter-core interruption notification of the inspection task, specifically, after the inspection flag in the inspection flag region of the first inter-core communication data region is read, enter the IPI down interruption processing, and turn off the interruption response and stop the task from running. After the task running is stopped and the interruption is turned off, step (5) is performed.
(5) Reply with interruption acknowledge by the another processor core that has turned off the interruption, where an interruption acknowledge character (ACK) is set to indicate that the another processor core has stopping running. Specifically, the another processor core (for example, the core 2) that has stopped responding to the interruption writes an ACK to a designated position in the inter-core communication data region corresponding to the inspection task, such as the interruption acknowledge region corresponding to the another processor core. Each of the other processor cores sets a position of a corresponding interruption acknowledge character in the inter-core communication data region. For example, the way that the another processor core responds to the inter-core interruption and replies with ACK is to write designated data (0x55555555) at the designated memory address of the IPI partition of the dedicated memory region for inspection, indicating that the current processor core has stopped running another task.

The another processor core continues to perform step (11).
(6) Check, during the inspection task, whether the another processor core (CPU) has stopped running, and continue to perform step (6) if there is a core that has not stopped running (stopping the interruption response and task running) in the another processor core; and otherwise, when the another processor core has stopped running, perform step (7).
(7) Start the memory inspection. The first processor core performs the memory inspection, and steps (8) and (9) are performed after the inspection is completed.
(8) Set the inspection flag of the first inter-core communication data region as the inspection end (for example, the inspection completion synchronization flag, that is, the IPI sync flag). Specifically, in the inspection task, an inspection end flag (for example, 0xAAAAAAAA) is written to a designated physical address (that is, the inspection flag region) of the IPI partition of the dedicated memory region for inspection, and the another processor core polls and checks the data of the memory address. If the data is 0xAAAAAAAA, it is determined that the inspection is over, and the system operation is resumed.
(9) Turn on the interruption and schedule, turn on the interruption of the first processor core and resume the running of the other task, and continue to perform step (10).
(10) Make the inspection task sleep, to wait for next triggering of the inspection task.
(11) Poll, by the another processor core, the first inter-core communication data region, to check whether the inspection task is completed, continue to perform step (11) if the inspection task is not completed, and exit the interruption, that is, open the interruption response, if the inspection task is completed. In addition, the interruption acknowledge character is restored to the original unacknowledged state for use in the next cycle of memory inspection. Specifically, the interruption acknowledge region of the first inter-core communication data region is set as a default value. In another embodiment, this step may further be performed when the corresponding inspection task starts. For example, before the IPI inspection task flag is set as an inspection start, the interruption acknowledge character is restored to the default value, that is, the unacknowledged state.

Specifically, after the another processor core responds to the memory inspection inter-core interruption, it is necessary to poll to determine whether the inspection is completed. The determination is made by not using any global, static variables and any automatic variables in the runtime stack, but in the following manner (taking the inspection end flag memory address 0x80000000 as an example):
Method 1: Directly read the inspection flag data in the memory region, and determine whether the value of the inspection flag meets the designated inspection end value (0xAAAAAAAA):

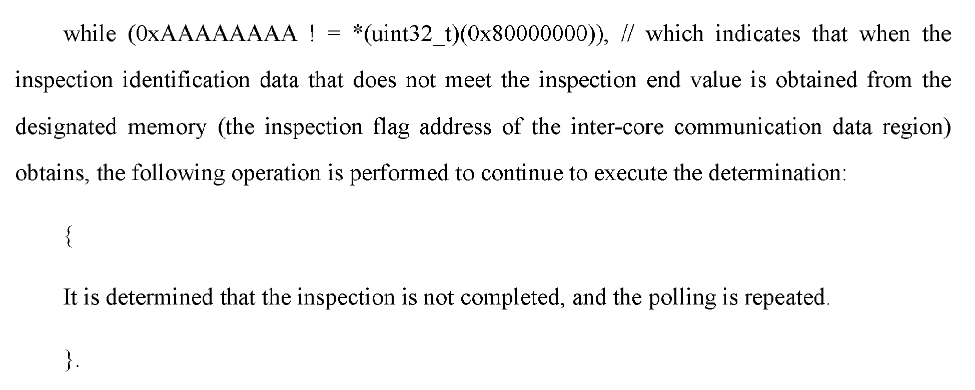

Method 2: Use register variables to store the acquired inspection flag data.

Register end_value = 0; //which indicates that the register variable is defined.

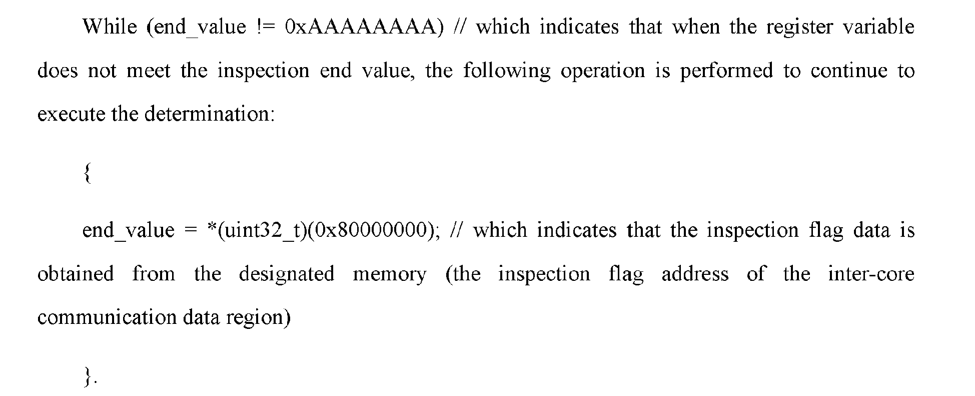

Based on the same invention concept, as shown in FIG. 4, the embodiments of the present invention further provide a memory inspection system of a multi-core processor, including:
a setting module configured to set, in a memory, a first inspection information region used in a first inspection task, where the first inspection information region includes a first inter-core communication data region and a first inspection-task stack region; and
an execution module configured to perform the first inspection task and inspect the memory, and perform inter-core interruption communication by using the first inter-core communication data region, to notify another processor core to stop running a task, where
the another processor core is different from a first processor core used during the first inspection task.

The setting module is further configured to:
set, in the memory, a second inspection information region used in a second inspection task, where the second inspection information region includes a second inter-core communication data region and a second inspection-task stack region; and
the second inspection task is configured to check the first inspection information region. The execution module is further configured to execute the second inspection task.

Further, the first inspection information region further includes a first memory inspection data region and a first data backup region.

The first memory inspection data region is configured to save inspection data of the first inspection task.

The first data backup region is configured to back up detected memory region data.

The first inspection-task stack region is configured as a stack of the first inspection task.

Further, the execution module is configured to control the first inspection task and the second inspection task to run in a mutually exclusive manner by using the first inter-core communication data region and the second inter-core communication data region.

The memory inspection system of a multi-core processor further includes an interruption response module configured to control the another processor core to respond to an inter-core interruption, and write designated data into the first inter-core communication data region to indicate that this processor core has stopped running the task.

The connection relationship in FIG. 4 represents the data connection, that is, the interruption communication between the interruption response module and the execution module is performed through the inspection information region set by the setting module.

According to the embodiments of the present invention, the specific structures of the first inspection information region and the second inspection information region of the system and the specific execution manners of the first inspection task and the second inspection task may be obtained through the above foregoing embodiments. This is not repeated.

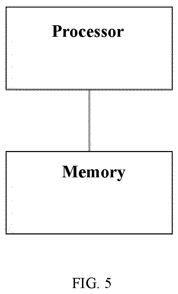

The method of the present invention can be implemented by a system controlled by a computer or an embedded program. Therefore, correspondingly, the embodiments of the present invention further provide another memory inspection system of a multi-core processor. As shown in FIG. 5, the memory inspection system of a multi-core processor includes at least one processor and at least one memory, where the memory is configured to store a computer program for executing the method according to any one of these embodiments of the present invention, and the processor is configured to invoke the computer program in the memory to execute method according to any one of these embodiments of the present invention.

Further, the memory may be communicatively connected to one or more processors. The memory stores instructions executable by the one or more processors. The instructions are executed by the one or more processors to enable the one or more processors to implement the method of the present invention.

## Claims

1. A memory inspection method for a multi-core processor, comprising:
setting, in a memory, a dedicated memory region as a first inspection information region for use in a first inspection task, wherein the first inspection information region comprises a first inter-core communication data region, a first inspection-task stack region, a first memory inspection data region and a first data backup region, wherein
the first memory inspection data region is configured to save inspection data of the first inspection task; the first data backup region is configured to back up data of a to-be-inspected region; and the first inspection-task stack region is configured as a stack of the first inspection task; and
during a memory inspection,
performing communication for inter-core interruption by using the first inter-core communication data region, to notify another processor core to stop running a task, whereinthe another processor core is different from a first processor core used during the first inspection task,
and then performing read/write inspection, including:
writing data of a designated pattern to a to-be-inspected region, then reading the data in the to-be-inspected region, comparing the written data and the read data to check whether they are consistent, and determining that the to-be-inspected region is faulty if they are inconsistent,
wherein original data in the to-be-inspected region are backed up before the read/write inspection, and the original data are restored after the read/write inspection;
further comprising:
setting, in the memory, a second inspection information region for use in a second inspection task, wherein the second inspection information region comprises a second inter-core communication data region, a second inspection-task stack region, a second memory inspection data region and a second data backup region, wherein
the second memory inspection data region is configured to save the inspection data of the second inspection task, the second data backup region is configured to back up data, and the second inspection-task stack region is configured as a stack of the second inspection task; and
the dedicated memory region as the first inspection information region is not able to be inspected by the first inspection task, and
the second inspection task is configured to inspect the dedicated memory region of the first inspection information region.

2. The memory inspection method for a multi-core processor according to claim 1, wherein
the first inspection task and the second inspection task are run in a mutually exclusive manner by using the first inter-core communication data region and the second inter-core communication data region.

3. The memory inspection method for a multi-core processor according to claim 1, wherein
the another processor core responds to an inter-core interruption, and writes designated data into the first inter-core communication data region to indicate that this processor core has stopped running the task.

4. The memory inspection method for a multi-core processor according to claim 3, comprising:
setting an interruption acknowledge region corresponding to the another processor core in the first inter-core communication data region, and writing an interruption acknowledge character into the corresponding interruption acknowledge region to indicate that the another processor core has stopped running the task.

5. The memory inspection method for a multi-core processor according to claim 1, wherein the performing communication for inter-core interruption by using the first inter-core communication data region comprises:
during the first inspection task, setting an inspection flag of the first inter-core communication data region to be that the inspection starts, and after the first inspection task, setting the inspection flag to be that the inspection ends; and
polling and checking, by the another processor core, the inspection flag of the first inter-core communication data region, and when the inspection flag is that the inspection ends, restoring the running of the task.

6. The memory inspection method for a multi-core processor according to any one of claims 1 to 5,
comprising:
(1) starting the inspection task, and performing steps (2) and (3);
(2) turning off an interruption/schedule, and turning off an interruption response of the first processor core and stopping the task from running;
(3) sending the inter-core interruption, notifying the another processor core to stop running in an IPI communication manner, and continue to perform step (6) by the first processor core;
(4) after the another processor core receives an inter-core interruption notification of the inspection task, turning off the interruption response and stopping the task from running, and then performing step (5);
(5) replying with interruption acknowledgment by the another processor core that has turned off the interruption, and continue to perform step (11);
(6) checking, during the inspection task, whether the another processor core has stopped running, and continue to perform step (6) if there is another processor core that has not stopped running; and performing step (7) if the another processor core has stopped running;
(7) inspecting, by the first processor core, the memory, and then performing steps (8) and (9);
(8) setting the inspection flag of the first inter-core communication data region to be that the inspection ends;
(9) turning on the interruption and the schedule of the first processor core, and continue to perform step (10);
(10) the inspection task sleeps, waiting for a next triggering of the inspection task; and
(11) polling, by the another processor core, the first inter-core communication data region, to check whether the inspection task is completed, continue to perform step (11) if the inspection task is not completed, and exiting the interruption if the inspection task is completed.

7. A memory inspection system for a multi-core processor, comprising a memory and at least two processor cores including a first processor core and at least one further processor core, wherein the memory inspection system is configured to perform the method of any one of claims 1 to 6.

8. Computer program comprising instructions which, when the program is executed by a processor, cause the processor to carry out the method of any of claims 1 to 6.

9. A memory inspection system for a multi-core processor, comprising at least one processor and at least one memory, wherein
the memory stores the computer program of claim 8.

## Revendications

1. Procédé d'inspection de mémoire pour un processeur multicœur, comprenant :
le réglage, dans une mémoire, d'une région de mémoire dédiée en tant que première région d'informations d'inspection destinée à être utilisée dans une première tâche d'inspection, dans lequel la première région d'informations d'inspection comprend une première région de données de communication inter-cœurs, une première région de pile de tâche d'inspection, une première région de données d'inspection de mémoire et une première région de sauvegarde de données,
dans lequel la première région de données d'inspection de mémoire est configurée pour enregistrer des données d'inspection de la première tâche d'inspection ; la première région de sauvegarde de données est configurée pour sauvegarder des données d'une région à inspecter ; et la première région de pile de tâche d'inspection est configurée en tant que pile de la première tâche d'inspection ; et
au cours d'une inspection de mémoire,
la réalisation d'une communication d'interruption inter-cœurs à l'aide de la première région de données de communication inter-cœurs, afin de notifier à un autre cœur de processeur d'arrêter l'exécution d'une tâche, dans lequel l'autre cœur de processeur est différent d'un premier cœur de processeur utilisé au cours de la première tâche d'inspection,
puis, la réalisation d'une inspection en lecture/écriture, comportant :
l'écriture de données suivant un motif prédéfini dans une région à inspecter, ensuite, la lecture des données dans la région à inspecter, la comparaison des données écrites et des données lues afin de vérifier si elles sont cohérentes, et la détermination du fait que la région à inspecter est défectueuse si elles sont cohérentes,
dans lequel des données d'origine de la région à inspecter sont sauvegardées avant l'inspection en lecture/écriture, et les données d'origine sont restaurées après l'inspection en lecture/écriture ;
comprenant en outre :
le réglage, dans la mémoire, d'une seconde région d'informations d'inspection destinée à être utilisée dans une seconde tâche d'inspection, dans lequel la seconde région d'informations d'inspection comprend une seconde région de données de communication inter-cœurs, une seconde région de pile de tâche d'inspection, une seconde région de données d'inspection de mémoire et une seconde région de sauvegarde de données, dans lequel
la seconde région de données d'inspection de mémoire est configurée pour enregistrer les données d'inspection de la seconde tâche d'inspection, la seconde région de sauvegarde de données est configurée pour sauvegarder des données, et la seconde région de pile de tâche d'inspection est configurée en tant que pile de la seconde tâche d'inspection ; et
la région de mémoire dédiée servant de première région d'informations d'inspection ne peut pas être inspectée par la première tâche d'inspection, et
la seconde tâche d'inspection est configurée pour inspecter la région de mémoire dédiée de la première région d'informations d'inspection.

2. Procédé d'inspection de mémoire pour un processeur multicœur selon la revendication 1, dans lequel la première tâche d'inspection et la seconde tâche d'inspection sont exécutées de manière mutuellement exclusive à l'aide de la première région de données de communication inter-cœurs et de la seconde région de données de communication inter-cœurs.

3. Procédé d'inspection de mémoire pour un processeur multicœur selon la revendication 1, dans lequel
l'autre cœur de processeur répond à une interruption inter-cœurs et écrit des données prédéfinies dans la première région de données de communication inter-cœurs pour indiquer que ce cœur de processeur a arrêté l'exécution de la tâche.

4. Procédé d'inspection de mémoire pour un processeur multicœur selon la revendication 3, comprenant :
le réglage d'une région accusé de réception positif d'interruption correspondant à l'autre cœur de processeur dans la première région de données de communication inter-cœurs, et l'écriture d'un caractère accusé de réception positif d'interruption dans la région accusé de réception positif d'interruption correspondante pour indiquer que l'autre cœur de processeur a arrêté l'exécution de la tâche.

5. Procédé d'inspection de mémoire pour un processeur multicœur selon la revendication 1, dans lequel la réalisation d'une communication d'interruption inter-cœurs à l'aide de la première région de données de communication inter-cœurs comprend :
au cours de la première tâche d'inspection, le réglage d'un indicateur d'inspection de la première région de données de communication inter-cœurs pour indiquer que l'inspection commence, et après la première tâche d'inspection, le réglage de l'indicateur d'inspection pour indiquer que l'inspection se termine ; et
l'interrogation et l'inspection, par l'autre cœur de processeur, de l'indicateur d'inspection de la première région de données de communication inter-cœurs, et lorsque l'indicateur d'inspection indique que l'inspection se termine, la reprise de l'exécution de la tâche.

6. Procédé d'inspection de mémoire pour un processeur multicœur selon l'une quelconque des revendications 1 à 5, comprenant :
(1) le lancement de la tâche d'inspection, et la réalisation des étapes (2) et (3) ;
(2) la désactivation d'une interruption/d'une planification, et la désactivation d'une réponse à l'interruption du premier cœur de processeur et l'arrêt de l'exécution de la tâche ;
(3) l'envoi d'une interruption inter-cœurs, la notification à l'autre cœur de processeur d'arrêter l'exécution selon un mode de communication IPI (Interruption inter-processeurs, ), et la poursuite de la réalisation de l'étape (6) par le premier cœur de processeur ;
(4) une fois que l'autre cœur de processeur a reçu une notification d'interruption inter-cœurs relative à la tâche d'inspection, la désactivation de la réponse à l'interruption et l'arrêt de l'exécution de la tâche, puis la réalisation de l'étape (5) ;
(5) la réponse avec un accusé de réception positif d'interruption par l'autre cœur de processeur qui a désactivé l'interruption, puis la poursuite de la réalisation de l'étape (11) ;
(6) l'inspection, au cours de la tâche d'inspection, du fait que l'autre cœur de processeur a arrêté l'exécution, et la poursuite de la réalisation de l'étape (6) s'il existe un autre cœur de processeur qui n'a pas arrêté l'exécution ; et la réalisation de l'étape (7) si l'autre cœur de processeur a arrêté l'exécution ;
(7) l'inspection, par le premier cœur de processeur, de la mémoire, puis, la réalisation des étapes (8) et (9) ;
(8) le réglage de l'indicateur d'inspection de la première région de données de communication inter-cœurs pour indiquer que l'inspection se termine ;
(9) l'activation de l'interruption et de la planification du premier cœur de processeur, et la poursuite de la réalisation de l'étape (10) ;
(10) la tâche d'inspection se met en veille, en attendant un prochain déclenchement de la tâche d'inspection ; et
(11) l'interrogation, par l'autre cœur de processeur, de la première région de données de communication inter-cœurs, afin d'inspecter si la tâche d'inspection est terminée, la poursuite de la réalisation de l'étape (11) si la tâche d'inspection n'est pas terminée, et la sortie de l'interruption si la tâche d'inspection est terminée.

7. Système d'inspection de mémoire pour un processeur multicœur, comprenant une mémoire et au moins deux cœurs de processeur qui comportent un premier cœur de processeur et au moins un autre cœur de processeur, dans lequel le système d'inspection de mémoire est configuré pour mettre en œuvre le procédé selon l'une quelconque des revendications 1 à 6.

8. Programme informatique comprenant des instructions qui, lorsque le programme est exécuté par un processeur, amènent le processeur à mettre en œuvre le procédé selon l'une quelconque des revendications 1 à 6.

9. Système d'inspection de mémoire pour un processeur multicœur, comprenant au moins un processeur et au moins une mémoire, dans lequel
la mémoire stocke le programme informatique selon la revendication 8.

## Patentansprüche

1. Verfahren zur Speicherprüfung für einen Multi-Core-Prozessor, umfassend:
Einrichten eines dedizierten Speicherbereichs in einem Speicher als ein erster Prüfinformationsbereich zur Verwendung in einer ersten Prüfaufgabe, wobei der erste Prüfinformationsbereich einen ersten Datenbereich für Inter-Core-Kommunikation, einen ersten Stapelbereich für Prüfaufgabe, einen ersten Speicherprüfdatenbereich und einen ersten Datensicherungsbereich umfasst, wobei der erste Speicherprüfdatenbereich so konfiguriert ist, dass er Prüfdaten der ersten Prüfaufgabe speichert, wobei der erste Datensicherungsbereich so konfiguriert ist, dass er Daten eines zu prüfenden Bereichs sichert, wobei der erste Stapelbereich für Prüfaufgabe als ein Stapel der ersten Prüfaufgabe konfiguriert ist; und während einer Speicherprüfung,
Durchführen einer Kommunikation für eine Inter-Core-Unterbrechung unter Verwendung des ersten Datenbereichs für Inter-Core-Kommunikation, um einen anderen Prozessorkern anzuweisen, eine Ausführung einer Aufgabe anzuhalten, wobei sich der andere Prozessorkern von einem ersten Prozessorkern unterscheidet, der während der ersten Prüfaufgabe verwendet wird;
und anschließend Durchführen einer Lese-/Schreibprüfung, enthaltend:
Schreiben von Daten eines festgelegten Musters in einen zu prüfenden Bereich, anschließend Lesen der Daten in dem zu prüfenden Bereich, Vergleichen der geschriebenen Daten mit den gelesenen Daten, um zu checken, ob sie übereinstimmen, und Bestimmen, dass der zu prüfende Bereich fehlerhaft ist, falls sie nicht übereinstimmen,
wobei Originaldaten in dem zu prüfenden Bereich vor der Lese-/Schreibprüfung gesichert werden und die Originaldaten nach der Lese-/Schreibprüfung wiederhergestellt werden;
ferner umfassend:
Einrichten eines zweiten Prüfinformationsbereichs in dem Speicher zur Verwendung in einer zweiten Prüfaufgabe, wobei der zweite Prüfinformationsbereich einen zweiten Datenbereich für Inter-Core-Kommunikation, einen zweiten Stapelbereich für Prüfaufgabe, einen zweiten Speicherprüfdatenbereich und einen zweiten Datensicherungsbereich umfasst, wobei
der zweite Speicherprüfdatenbereich so konfiguriert ist, dass er die Prüfdaten der zweiten Prüfaufgabe speichert, wobei der zweite Datensicherungsbereich so konfiguriert ist, dass er Daten sichert, wobei der zweite Stapelbereich für Prüfaufgabe als ein Stapel der zweiten Prüfaufgabe konfiguriert ist, und
wobei der dedizierte Speicherbereich als der erste Prüfinformationsbereich von der ersten Prüfaufgabe nicht geprüft werden kann,
und wobei die zweite Prüfaufgabe so konfiguriert ist, dass sie den dedizierten Speicherbereich des ersten Prüfinformationsbereichs prüft.

2. Verfahren zur Speicherprüfung für einen Multi-Core-Prozessor nach Anspruch 1, wobei die erste Prüfaufgabe und die zweite Prüfaufgabe unter Verwendung des ersten Datenbereichs für Inter-Core-Kommunikation und des zweiten Datenbereichs für Inter-Core-Kommunikation gegenseitig exklusiv ausgeführt werden.

3. Verfahren zur Speicherprüfung für einen Multi-Core-Prozessor nach Anspruch 1, wobei der andere Prozessorkern auf eine Inter-Core-Unterbrechung reagiert und bestimmte Daten in den ersten Datenbereich für Inter-Core-Kommunikation schreibt, um anzuzeigen, dass dieser Prozessorkern die Ausführung der Aufgabe angehalten hat.

4. Verfahren zur Speicherprüfung für einen Multi-Core-Prozessor nach Anspruch 3, umfassend:
Einrichten eines dem anderen Prozessorkern entsprechenden Unterbrechungsbestätigungsbereichs im ersten Datenbereich für Inter-Core-Kommunikation und Schreiben eines Unterbrechungsbestätigungszeichens in den entsprechenden Unterbrechungsbestätigungsbereich, um anzuzeigen, dass der andere Prozessorkern die Ausführung der Aufgabe angehalten hat.

5. Verfahren zur Speicherprüfung für einen Multi-Core-Prozessor nach Anspruch 1, wobei das Durchführen der Kommunikation für eine Inter-Core-Unterbrechung unter Verwendung des ersten Datenbereichs für Inter-Core-Kommunikation Folgendes umfasst:
während der ersten Prüfaufgabe Einrichten eines Prüfflags des ersten Datenbereichs für Inter-Core-Kommunikation auf einen Status "Prüfung beginnt", und nach der ersten Prüfaufgabe Einrichten des Prüfflags auf einen Status "Prüfung endet"; und Abfragen und Checken des Prüfflags des ersten Datenbereichs für Inter-Core-Kommunikation durch den anderen Prozessorkern und, wenn das Prüfflag im Status "Prüfung endet" ist, Wiederherstellen der Ausführung der Aufgabe.

6. Verfahren zur Speicherprüfung für einen Multi-Core-Prozessor nach einem der Ansprüche 1 bis 5, umfassend:
(1) Starten der Prüfaufgabe und Durchführen der Schritte (2) und (3);
(2) Deaktivieren eines Unterbrechungsschedulers sowie Deaktivieren der Unterbrechungsreaktion des ersten Prozessorkerns und Anhalten der Ausführung der Aufgabe;
(3) Senden der Inter-Core-Unterbrechung, Anweisen des anderen Prozessorkerns, die Ausführung mittels Inter-Core-Unterbrechungskommunikation anzuhalten, und Fortsetzen der Durchführung von Schritt (6) durch den ersten Prozessorkern;
(4) nachdem der andere Prozessorkern eine Inter-Core-Unterbrechungsanweisung der Prüfaufgabe empfangen hat, Deaktivieren der Unterbrechungsreaktion und Anhalten der Ausführung der Aufgabe, und anschließend Durchführung von Schritt (5);
(5) Antworten mit einer Unterbrechungsbestätigung durch den anderen Prozessorkern, der die Unterbrechungsreaktion deaktiviert hat, und Fortsetzen der Durchführung von Schritt (11);
(6) Checken während der Prüfaufgabe, ob der andere Prozessorkern die Ausführung angehalten hat, und Fortsetzen der Durchführung von Schritt (6), falls ein anderer Prozessorkern vorhanden ist, der die Ausführung nicht angehalten hat; und Durchführen von Schritt (7), falls der andere Prozessorkern die Ausführung angehalten hat;
(7) Prüfen des Speichers durch den ersten Prozessorkern und anschließend Durchführen der Schritte (8) und (9);
(8) Einrichten des Prüfflags des ersten Datenbereichs für Inter-Core-Kommunikation auf den Status "Prüfung endet";
(9) Aktivieren der Unterbrechung und des Schedulers des ersten Prozessorkerns sowie Fortsetzen der Durchführung von Schritt (10);
(10) Warten auf eine nächste Auslösung der Prüfaufgabe, nachdem die Prüfaufgabe in den Ruhezustand versetzt wird; und
(11) Abfragen des ersten Datenbereichs für Inter-Core-Kommunikation durch den anderen Prozessorkern, um zu checken, ob die Prüfaufgabe abgeschlossen ist, Fortsetzen der Ausführung von Schritt (11), falls die Prüfaufgabe nicht abgeschlossen ist, und Beenden der Unterbrechung, falls die Prüfaufgabe abgeschlossen ist.

7. Speicherprüfsystem für einen Multi-Core-Prozessor, umfassend einen Speicher und mindestens zwei Prozessorkerne, einschließlich eines ersten Prozessorkerns und mindestens eines weiteren Prozessorkerns, wobei das Speicherprüfsystem so konfiguriert ist, dass es das Verfahren nach einem der Ansprüche 1 bis 6 durchführt.

8. Computerprogramm, das Befehle umfasst, die, wenn das Programm von einem Prozessor ausgeführt wird, den Prozessor veranlassen, das Verfahren nach einem der Ansprüche 1 bis 6 zu implementieren.

9. Speicherprüfsystem für einen Multi-Core-Prozessor, das mindestens einen Prozessor und mindestens einen Speicher umfasst, wobei der Speicher das Computerprogramm nach Anspruch 8 speichert.
